# EUROPEAN PATENT APPLICATION

(11) **EP 4 480 766 A1**
(43) Date of publication of application: **25.12.2024**
(21) Application number: 24177301.9
(22) Date of filing: 22.05.2024
(51) Int. Cl.: B60T 7/20, B60T 13/68, B60T 15/18, B60T 11/08

(54) **DEVICE FOR THE BRAKING CONTROL OF A TRAILER**

(30) Priority: 25.05.2023 IT 202300010563
(71) Applicant: SAFIM S.r.l., 41123 Modena (MO) (IT)
(72) Inventor: COLLAVINI, Maurizio, 41123 MODENA (IT); BENATI, Andrea, 41123 MODENA (IT)
(74) Representative: Zoli, Filippo

(57) **Abstract**

The device for the braking control of a trailer, comprising:
- one control line connectable to a source of a working fluid at a first pressure;
- one additional line connectable to a source of a working fluid at a second pressure;
- one braking line connectable to the braking system of the trailer;
- one accumulator connected to the control line in a fluid-operated manner,
- valve means positioned between the accumulator and the braking line and movable between at least one power supply position, wherein the accumulator is placed in communication with the braking line, and one isolation position, wherein the accumulator is isolated from said braking line;
- driving means of the valve means;

wherein it comprises detection means of the second pressure arranged along the additional line and
wherein the driving means comprise at least electrical driving means and at least one electrical driving line operationally connected to the detection means and adapted to send at least one electrical control signal to the electrical driving means depending on the measured pressure so as to command the displacement of the valve means.

## Description

### Technical Field

The present invention relates to a device for the braking control of a trailer.

### Background Art

It is well known that in the case of a trailer pulled by a tractor, their braking systems are operationally connected in such a way that braking of the tractor operated by the operator also causes braking of the towed trailer.

The trailer braking system is then driven by the tractor braking system in order to synchronize the braking forces operating on the same.

Therefore, the moment the operator actuates the tractor's brake pedal, he or she intervenes on the tractor's wheels and, by means of a brake valve (called a trailer-brake valve), also on the trailer's braking system.

As is well known, to date towing vehicles are connected to the relevant trailer by means of a connecting device comprising a pair of male couplings adapted to fit within a pair of relevant female couplings associated with the trailer. Specifically, the female couplings can be connected to a control line adapted to feed the trailer's braking system, and to an additional line, adapted to deactivate the emergency and/or parking brake, respectively, of the trailer itself.

The control line is capable of feeding the working fluid, usually oil, at a pressure comprised between 0 and 150 bar that varies depending on the braking pressure of the tractor. Trailer braking is then controlled by the working fluid pressure along the control line, so that the tractor braking and the trailer braking are as synchronized as possible with each other.

Instead, the additional line sends the working fluid at a pressure between 15 bar and 35 bar so as to keep the emergency and/or parking brake deactivated. In emergency situations, the additional line must reset the working fluid pressure to zero so that the trailer's emergency and/or parking brake is activated and, therefore, the trailer is braked.

These devices of known type for the braking control of a trailer involve a high degree of construction complexity related to the presence of several hydraulic connections required both to send the working fluid to the braking system of the trailer and to transmit the pressure signals necessary to command the braking valve located on the trailer itself.

As described above, in fact, to date it is necessary for the trailer to be provided with at least two hydraulic lines, the control line and the additional line, adapted to handle the service braking and the emergency and/or parking braking of the trailer tself, respectively.

### Description of the Invention

The main aim of the present invention is to devise a device for the braking control of a trailer which is constructively simpler than the devices of known type and at the same time is safe to operate.

Within this aim, one object of the present invention is to reduce the number of hydraulic connections on the trailer while maintaining the same functions as the devices of known type.

Another object of the present invention is to devise a device for the braking control of a trailer which allows the aforementioned drawbacks of the prior art to be overcome within the framework of a simple, rational, easy and effective to use as well as inexpensive solution.

The aforementioned objects are achieved by this device for the braking control of a trailer according to claim 1.

### Brief Description of the Drawings

Other characteristics and advantages of the present invention will become more apparent from the description of a preferred, but not exclusive, embodiment of a device for the braking control of a trailer, illustrated by way of an indicative yet non-limiting example, in the accompanying tables of drawings wherein:
figure 1 is the hydraulic diagram of a device according to the invention, in a first embodiment;
figure 2 is the hydraulic diagram of a device according to the invention, in a second embodiment;
figure 3 is the hydraulic diagram of a device according to the invention, in a third embodiment;
figure 4 is the diagram of an alternative embodiment of the linking means of a device according to the invention.

### Embodiments of the Invention

With particular reference to these figures, reference numeral 1 globally denotes a device for the braking control of a trailer.

The device 1 comprises at least one control line 2 connectable to a source of a working fluid at a first pressure, generally between 0 and 150 bar, and at least one additional line 3 connectable to a source of a working fluid at a second pressure, generally between 15 bar and 35 bar.

Advantageously, the device 1 comprises at least one coupling 4a connectable to the towing vehicle in a removable manner and associated with the additional line 3.

Appropriately, the device 1 also comprises an additional coupling 4b associated with the control line 2.

The control line 2 and the additional line 3 receive the pressurized working fluid from the towing vehicle through the relevant couplings 4a,4b.

Each coupling 4a,4b is movable between at least a first position, wherein it is connected to the towing vehicle, and a second position, wherein it is disconnected from the towing vehicle.

The device 1 then comprises at least one braking line 5 connectable to the braking system of the trailer, at least one accumulator 6 connected to the control line 2 in a fluid-operated manner, valve means 7 positioned between the accumulator 6 and the braking line 5, and driving means 8,18 of the valve means 7.

The control line 2 is placed in communication with the braking line 5. Appropriately, at least one one-way valve 9 is positioned between the control line 2 and the braking line 5 and is adapted to prevent the working fluid from passing towards the control line itself.

The valve means 7 are movable between at least one power supply position, wherein the accumulator 6 is placed in communication with the braking line 5, and one isolation position, wherein the accumulator 6 is isolated from the braking line 5.

In more detail, the valve means 7 comprise at least a first one-way valve 10 adapted to prevent, in the isolation position, the working fluid from passing from the accumulator 6 towards the braking line 5 and to allow the passage of the working fluid coming from the control line 2 towards the accumulator itself.

Specifically, in the power supply position, activation of the braking system of he trailer occurs (this operating condition is also called emergency braking) as a result of the working fluid under pressure being transferred from the accumulator 6 to the braking system of the trailer itself. In the isolation position, on the other hand, the braking system of the trailer is controlled solely by the incoming working fluid from the control line 2, so that braking is proportional to the braking rate of the towing vehicle.

According to the invention, the device 1 comprises detection means 11 of the second pressure arranged along the additional line 3 and the driving means 8,18 comprise at least electrical driving means 8 and at least one electrical driving line 12 operationally connected to the detection means 11. The driving line 12 is adapted to send at least one electrical control signal to the electrical driving means 8 depending on the pressure measured so as to command the displacement of the valve means 7.

Preferably, the device 1 comprises linking means 29 to the towing vehicle and at least one valve block 30 associated, in use, with the trailer, physically separated from the linking means 29 and placed, in use, at some distance from them.

The linking means 29 comprise at least the coupling 4a, the additional line 3, the latter being associated with the coupling 4a, and the detection means 11, while the valve block 30 comprises at least the valve means 7. The linking means 29 and the valve block 30 are operationally connected to each other by means of the electrical driving line 12.

Thus, there is no hydraulic connection between the additional line 3 and the valve block 30.

More particularly, the detection means 11 are adapted to measure the pressure of the working fluid incoming from the towing vehicle and to convert the detected value into a corresponding electrical signal. The detection means 11 are, e.g., of the type of a pressure transducer or a pressure switch.

Advantageously, the driving line 12 is adapted to send the electrical control signal to the electrical driving means 8 when the pressure measured by the detection means 11 is higher than a predefined value, where such electrical control signal activates the electrical driving means 8 so as to push the valve means 7 towards the isolation position.

In the embodiments shown in the figures, when the pressure measured by the detection means 11 exceeds a predefined calibration value, the detection means themselves close an electrical circuit connected to the driving line 12 thus allowing an electrical signal, the electrical control signal, to pass along it which consequently transmits this signal to the electrical driving means 8. In this case, the accumulator 6 is then isolated, by means of the valve means 7, from the braking line 5 so that the emergency/parking braking of the trailer is deactivated. Similarly, when the pressure measured by the detection means 11 is below the predefined calibration value, the driving line 12 does not send any signal to the electrical driving means 8.

More particularly, in the absence of the electrical control signal, the valve means 7 arrange themselves in the power supply position, so as to place the accumulator 6 in communication with the braking line 5 and consequently activate the emergency/parking braking.

Appropriately, the driving means 8,18 also comprise mechanical driving means 18 operating on the valve means 7.

In more detail, the mechanical driving means 18 comprise at least first elastic means 18a operating on the valve means 7 opposite the electrical driving means 8 and adapted to counteract the displacement thereof towards the relevant isolation position.

Preferably, the mechanical driving means 18 comprise at least one manually-operated lever 18b to command the displacement of the valve means 7 at least from the power supply position to the isolation position.

The manually-operated lever 18b is useful in the event of the pressure measured by the detection means 11 being below the predefined value, so that the valve means 7 arrange themselves in the power supply position in order to activate the emergency/parking braking, and it is still necessary to release the brakes of the trailer in order to carry out the movement thereof, for example to displace it from a dangerous condition. By means of the manually-operated lever 18b, it is therefore possible to manually bring the valve means 7 to the isolation position in order to prevent the accumulator 6 from continuing to supply the braking line 5 so that the emergency and/or parking brake of the trailer can then be released, again manually.

In particular, the device 1 is also provided with pumping means 13 positioned between the braking line 5 and the accumulator 6 and manually operable to take the working fluid from the braking line 5 and to send it within the accumulator 6. Appropriately, one-way valve means 20 are provided between the braking line 5 and the pumping means 13, so as to prevent the working fluid from being sent to the braking line 5, and between the pumping means 13 and the accumulator 6, so as to prevent the working fluid from being returned to the pumping means themselves. Therefore, through the use of the manually-operated lever 18b and of the pumping means 13, it is possible to release the braking system of the trailer, by deactivating the emergency and/or parking brake, even in the absence of pressure along the additional line 3.

The valve means 7 are also adapted to isolate the accumulator 6 from the control line 2 in the absence of the electrical control signal, so as to prevent the working fluid sent from the accumulator 6 from being even partly conveyed towards the control line 2. More particularly, the valve means 7 comprise at least a second one-way valve 14 positioned, at the power supply position of the valve means 7, between the braking line 5 (in turn communicating with the accumulator 6) and the control line 2 and adapted to prevent the working fluid from flowing from the braking line 5 towards the control line 2.

In turn, the control line 2 is placed in communication with the accumulator 6 at any position of the valve means 7 (the one-way valves positioned between the control line 2 and the accumulator 6 in fact allow the working fluid to flow towards the latter), so that it can be recharged in case there is working fluid under pressure along it.

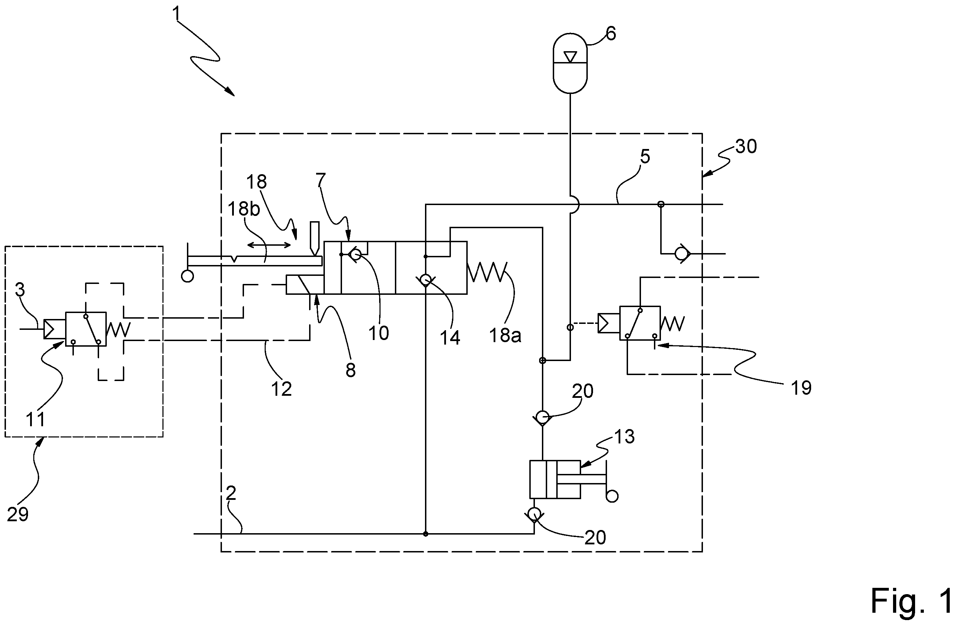

In the embodiment shown in Figure 1, the valve means 7 consist of a single drawer on which the electrical driving means 8 and the manually-operated lever 18b operate on one side and the first elastic means 18a operate on the other side. The first and the second one-way valves 10 and 14 are also housed within the drawer 7.

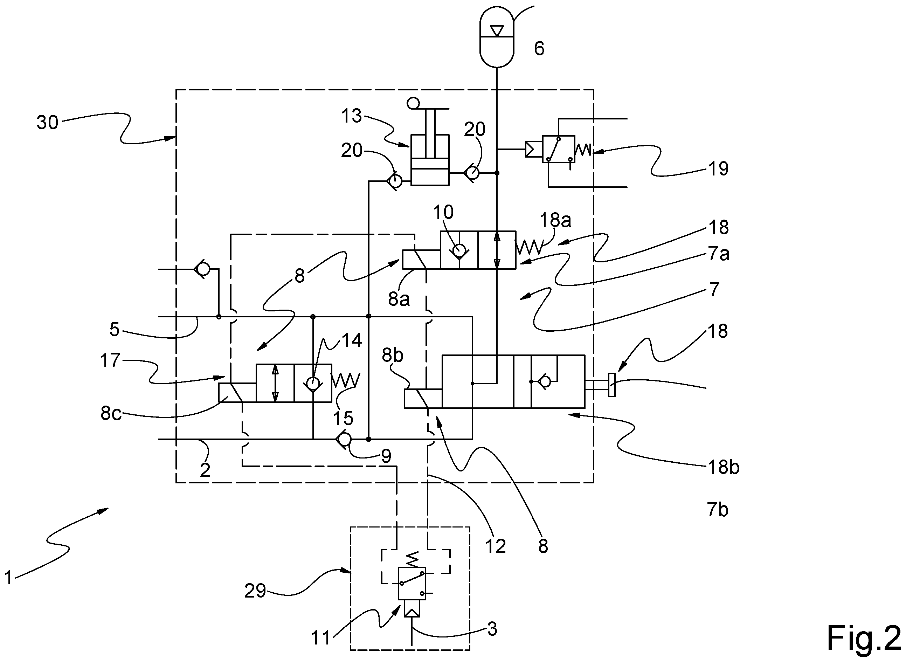

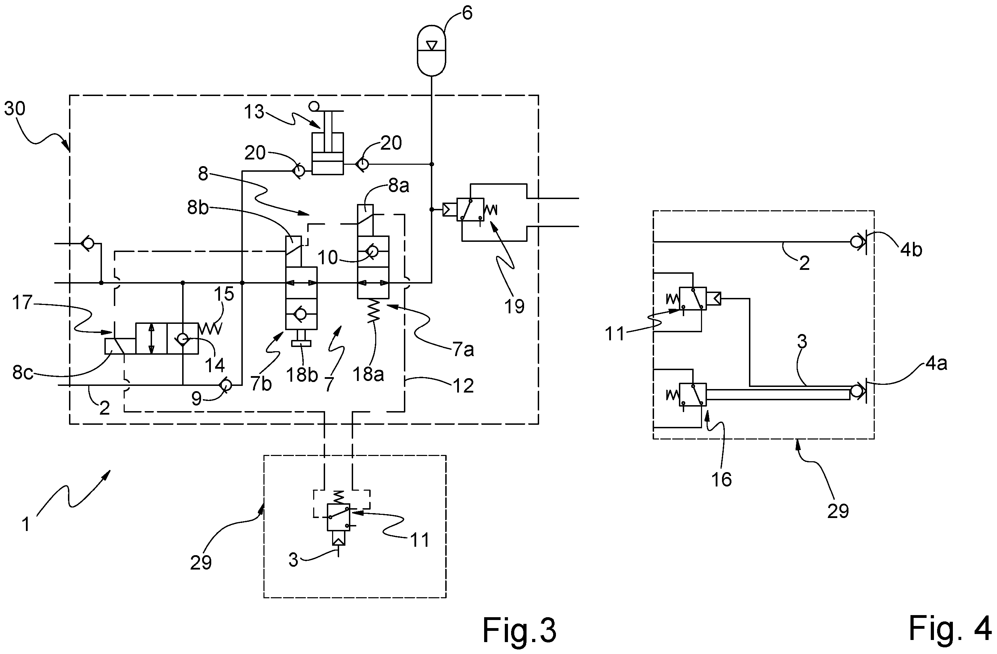

In the embodiments shown in Figures 2 and 3, on the other hand, the valve means 7 comprise at least first valve means 7a and second valve means 7b arranged in succession between them, wherein the first valve means 7a are positioned between the accumulator 6 and the second valve means 7b.

In these embodiments, the electrical driving means 8 comprise at least first electrical driving means 8a of the first valve means 7a and second electrical driving means 8b of the second valve means 7b, wherein the first valve means 7a and the second valve means 7b are movable between a relevant power supply position and a relevant isolation position. The first electrical driving means 8a and the second electrical driving means 8b are operationally connected to the driving line 12 so as to move the first valve means 7a and the second valve means 7b , respectively, from the relevant power supply position to the relevant isolation position as a result of the electrical control signal being sent. Both the first electrical driving means 8a and the second electrical driving means 8b receive the same signal from the driving line 12 and are therefore adapted to activate simultaneously as a result of the reception of the electrical control signal. Preferably, the first elastic means 18a operate on the first valve means 7a from the opposite side of the first electrical driving means 8a, and the manually-operated lever 18b is associated with the second valve means 7b.

Once the manually-operated lever 18b is activated, the second valve means 7b remain in the isolation position until the electrical control signal is reactivated by means of the driving line 12 or until the manually-operated lever 18b is moved to the opposite direction.

Advantageously, in the embodiments shown in Figures 2 and 3, the device 1 also comprises third valve means 17 positioned between the control line 2 and the braking line 5 and movable between a communication position, wherein they allow the flow of the working fluid between the control line 2 and the braking line 5, and an interruption position, wherein they prevent the working fluid from passing from the braking line 5 towards the control line 2.

Preferably, the electrical driving means 8 comprise third electrical driving means 8c operating on the third valve means 17 and operationally connected to the driving line 12, wherein the electrical control signal sent as a result of the detection of a higher pressure than the predefined value activates the third driving means themselves to move the third valve means 17 from the interruption position to the communication position.

The device 1 then comprises second elastic means 15 operating on the third valve means 17 from the opposite side of the third electrical driving means 8c so as to counteract the displacement of the third valve means themselves from the interruption position towards the communication position. In this way, in the absence of the electrical control signal, the third valve means 17 are automatically brought to the interruption position, so as to prevent the working fluid sent from the accumulator 6 along the braking line 5 as a result of the displacement of the first and of the second valve means 7a and 7b in the relevant power supply positions from being diverted along the control line 2.

Advantageously, the linking means 29 also comprise sensor means 16 associated with the coupling 4a connected to the additional line 3 and adapted to detect the displacement thereof between the relevant first position and second position. The sensor means 16 are operationally associated with the driving line 12, which is adapted to send the electrical control signal to the electrical driving means 8 when the coupling 4a is in the first position and to interrupt the electrical control signal when the coupling 4a is in the second position. In this way, the valve means 7 move to the power supply position when the detachment of the coupling 4a from the towing vehicle occurs, thus identifying an emergency situation and consequently activating the emergency and/or parking braking of the trailer.

In the embodiments shown in the figures, the device 1 also comprises a pressure switch 19 adapted to measure the pressure along the line supplying the accumulator 6.

The operation of this invention is as follows.

When the pressure of the working fluid coming from the source located on the towing vehicle and communicating with the additional line 3 is above the predefined value, the detection means 11 send an electrical signal to the driving line 12 which in turn sends the electrical control signal to the electrical driving means 8. The electrical driving means 8 then bring the valve means 7 to the isolation position (assuming that they were previously in the power supply position) so as to prevent the working fluid present in the accumulator 6 from flowing down the braking line 5. Under this operating condition, the pressurized working fluid along the control line 2 not only supplies the braking line 5 so as to achieve braking which is proportional to that of the towing vehicle, but also is able to recharge the accumulator 6.

The moment the pressure along the additional line 3 and measured by the detection means 11 drops below the predefined value, the electrical signal emitted by the detection means themselves and, consequently, also the signal sent from the driving line 12 to the electrical driving means 8 is interrupted.

It follows that the valve means 7 move to the power supply position so that the working fluid contained in the accumulator 6 can flow down the braking line 5 thus activating the emergency and/or parking braking.

More particularly, in the first embodiment, in the absence of the electrical control signal, the first elastic means 18a push the valve means 7 to the power supply position.

In the second embodiment and in the third embodiment, shown in Figures 2 and 3, the first valve means 7a move to the power supply position as a result of the absence of the electrical control signal and as a result of the action of the first elastic means 18a, while the second valve means 7b remain in the power supply position as a result of the absence of the electrical control signal and of the non-actuation of the manually-operated lever 18b. At the same time, the third valve means 17 move to the interruption position as a result of the action of the second elastic means 15, so as to prevent the working fluid from passing which flows towards the braking line 5 along the control line 2.

Each of the described and depicted embodiments then provides for the possibility of manually bringing the valve means 7 to their respective isolation positions so that the trailer can be displaced in case of need.

More specifically, in the first embodiment, the manually-operated lever 18b allows the displacement of the valve means 7 from the power supply position to the isolation position.

In the second embodiment and in the third embodiment, on the other hand, the manually-operated lever 18b allows only the second valve means 7b to be displaced to the relevant isolation position, while the first valve means 7a remain in their power supply position. This still allows the braking line 5 to be isolated from the accumulator 6.

In all of the described and depicted embodiments, once you have manually forced the displacement of the valve means 7 to the isolation position, the working fluid is drawn from the braking line 5 and sent back to the accumulator 6 by means of the pumping means 13, which are also manually operable, so as to release the braking system of the trailer and allow the same to be displaced.

Once the trailer has been displaced, for example to position it in a safe condition, to allow the emergency and/or parking brake to be reactivated, it is necessary to displace the manually-operated lever 18b to the opposite direction to the previous one or to send the electrical control signal.

It has in practice been ascertained that the described invention achieves the intended objects, and in particular, the fact is emphasized that the use of an electrical signal to command the deactivation of the emergency and/or parking brake enables the constructive realization of the device to be significantly simplified.

In fact, this reduces the hydraulic connections between the towing vehicle and the consequent risk of oil leakage in case of breakage.

In particular, the fact of electrically connecting the linking means comprising the additional line to the valve block associated with the trailer makes it possible to avoid hydraulically connecting the latter to the additional line itself, thereby reducing the risk of breakage and malfunction and, at the same time, also reducing the cost of implementation.

In addition, the additional use of sensor means adapted to detect the detachment of the coupling connected to the additional line makes it possible to ensure the prompt activation of the emergency and/or parking brake even before the pressure measuring means interrupt the sending of the electrical control signal.

## Claims

1. Device (1) for the braking control of a trailer, comprising:
- at least one control line (2) connectable to a source of a working fluid at a first pressure;
- at least one additional line (3) connectable to a source of a working fluid at a second pressure;
- at least one braking line (5) connectable to the braking system of the trailer;
- at least one accumulator (6) connected to said control line (2) in a fluid-operated manner,
- valve means (7) positioned between said accumulator (6) and said braking line (5) and movable between at least one power supply position, wherein said accumulator (6) is placed in communication with said braking line (5), and one isolation position, wherein said accumulator (6) is isolated from said braking line (5);
- driving means (8, 18) of said valve means (7);
**characterized by** the fact that it comprises detection means (11) of said second pressure arranged along said additional line (3) and
by the fact that said driving means (8, 18) comprise at least electrical driving means (8) and at least one electrical driving line (12) operationally connected to said detection means (11) and adapted to send at least one electrical control signal to said electrical driving means (8) depending on the measured pressure so as to command the displacement of said valve means (7).

2. Device (1) according to claim 1, **characterized by** the fact that said driving line (12) is adapted to send said electrical control signal to said electrical driving means (8) when the pressure measured by said detection means (11) is higher than a predefined value, said electrical control signal activating the electrical driving means (8) so as to push said valve means (7) towards the isolation position.

3. Device (1) according to claim 1 or 2, **characterized by** the fact that in the absence of said electrical control signal said valve means (7) are located in the power supply position.

4. Device (1) according to one or more of the preceding claims, **characterized by** the fact that said driving means (8, 18) comprise mechanical driving means (18) operating on said valve means (7).

5. Device (1) according to claim 4, **characterized by** the fact that said mechanical driving means (18) comprise at least first elastic means (18a) operating on said valve means (7) opposite said electrical driving means (8) and adapted to counteract the displacement thereof towards the relevant isolation position.

6. Device (1) according to claim 4 or 5, **characterized by** the fact that said mechanical driving means (18) comprise at least one manually-operated lever (18b) to command the displacement of said valve means (7) at least from the power supply position to the isolation position.

7. Device (1) according to one or more of the preceding claims, **characterized by** the fact that said valve means (7) are adapted to isolate said accumulator (6) from said control line (2) in the power supply position.

8. Device (1) according to one or more of the preceding claims, **characterized by** the fact that said valve means (7) comprise at least first valve means (7a) and at least second valve means (7b), wherein said first valve means (7a) are positioned between said accumulator (6) and said second valve means (7b) and by the fact that said electrical driving means (8) comprise at least first electrical driving means (8a) of said first valve means (7a) and at least second electrical driving means (8b) of said second valve means (7b),
wherein said first valve means (7a) and said second valve means (7b) are movable between a relevant said power supply position and a relevant said isolation position, and
wherein said first electrical driving means (8a) and said second electrical driving means (8b) are operationally connected to said driving line (12) so as to move said first valve means (7a) and said second valve means (7b) respectively from the relevant power supply position to the relevant isolation position as a result of said electrical control signal being sent.

9. Device (1) according to claim 8, **characterized by** the fact that said first elastic means (18a) operate on said first valve means (7a) from the opposite side of said first electrical driving means (8a) and by the fact that said manually-operated lever (18b) is associated with said second valve means (7b).

10. Device (1) according to claim 9, **characterized by** the fact that it comprises third valve means (17) positioned between said control line (2) and said braking line (5) and movable between a communication position, wherein they allow the passage of the working fluid between said control line (2) and said braking line (5), and an interruption position, wherein they prevent the working fluid from passing from the braking line (5) to the control line (2).

11. Device (1) according to claim 10, **characterized by** the fact that said electrical driving means (8) comprise third electrical driving means (8c) operating on said third valve means (17) and operationally connected to said driving line (12), said control signal being adapted to activate said third electrical driving means (8c) to move said third valve means (17) from the interruption position to the communication position.

12. Device (1) according to claim 11, **characterized by** the fact that it comprises second elastic means (15) operating on said third valve means (17) from the opposite side of said third electrical driving means (8c) to counteract the displacement of the third valve means themselves from the interruption position towards the communication position.

13. Device (1) according to one or more of the preceding claims, **characterized by** the fact that it comprises linking means (29) to the towing vehicle and at least one valve block (30) associated with the trailer, separate from said linking means (29) and operationally connected thereto, wherein said linking means (29) comprise at least one coupling (4a) connectable to the towing vehicle, said additional line (3) being associated with said coupling (4a), and said detection means (11) and wherein said valve block (30) comprises at least said valve means (7), said linking means (29) and said valve block (30) being operationally connected to each other by means of said electrical driving line (12).

14. Device (1) according to claim 13, **characterized by** the fact that said coupling (4a) is movable between at least a first position, wherein it is connected to the towing vehicle, and a second position, wherein it is disconnected from the towing vehicle, and by the fact that said linking means (29) comprise sensor means (16) associated with said coupling (4a) and adapted to detect the displacement thereof between said first position and said second position, wherein said sensor means (16) are operationally associated with said driving line (12), the latter being adapted to send said electrical control signal to said electrical driving means (8) when said coupling (4a) is in the first position and to interrupt said electrical control signal when said coupling (4a) is in the second position.
